(19) Europäisches Patentamt / European Patent Office / Office européen des brevets

(11) **EP 2 172 000 B1**

(12) **FASCICULE DE BREVET EUROPEEN**

(45) Date de publication et mention de la délivrance du brevet:
**26.04.2017 Bulletin 2017/17**

(21) Numéro de dépôt: **08774311.8**

(22) Date de dépôt: **26.06.2008**

(51) Int Cl.:
**H04N 5/232** *(2006.01)*     **H04N 1/21** *(2006.01)*

(86) Numéro de dépôt international:
**PCT/EP2008/058123**

(87) Numéro de publication internationale:
**WO 2009/000871 (31.12.2008 Gazette 2009/01)**

(54) **PROCEDE DE CREATION D'UNE SUITE SONORE DE PHOTOGRAPHIES, ET APPAREIL POUR LA CREATION ET LA REPRODUCTION D'UNE TELLE SUITE SONORE**

VERFAHREN ZUM ERZEUGEN EINER KLANGSERIE VON FOTOGRAFIEN UND VORRICHTUNGEN ZUM ERZEUGEN UND WIEDERGEBEN SOLCHER KLANGSERIEN

METHOD FOR GENERATING A SOUND SERIES OF PHOTOGRAPHS AND APPARATUS FOR GENERATING AND REPRODUCING SUCH SOUND SERIES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.06.2007 FR 0756030**

(43) Date de publication de la demande:
**07.04.2010 Bulletin 2010/14**

(73) Titulaire: **Thomson Licensing**
**92130 Issy-les-Moulineaux (FR)**

(72) Inventeurs:
• **OISEL, Lionel**
  **F-35137 Pleumeleuc (FR)**
• **CHEVALLIER, Louis**
  **F-35520 La Meziere (FR)**
• **ALLIE, Valerie**
  **F-35230 St.-Armel (FR)**

(74) Mandataire: **Huchet, Anne et al**
**TECHNICOLOR**
**1-5, rue Jeanne d'Arc**
**92130 Issy-les-Moulineaux (FR)**

(56) Documents cités:
**WO-A-00/62542          WO-A-98/15119**
**WO-A-2007/038198        WO-A2-99/59026**
**US-A1- 2006 028 542     US-B1- 6 930 703**

## Description

L'invention concerne un procédé de création d'une suite sonore de photographies à partir d'images fixes prises séparément, et un appareil pour la mise en oeuvre du procédé.

Dans un appareil photo numérique, l'image devant l'objectif est projetée sur un capteur CCD ou CMOS. L'image est ensuite convertie en données numériques et stockée dans une mémoire. La mémoire peut être incorporée définitivement dans l'appareil ou être amovible, elle se présente alors sous la forme d'un support enfichable. Grâce à la technologie numérique, l'utilisateur prend une photographie et peut la voir immédiatement après sur un petit écran généralement situé sur la face arrière de l'appareil, l'écran est typiquement LCD ou OLED. A l'aide de l'écran, l'utilisateur peut vérifier la qualité de la photographie qui vient d'être prise, décider de la garder en mémoire ou de l'effacer, et visualiser d'anciennes photographies dont les données sont enregistrées dans la mémoire. Dans certains appareils, le capteur CCD ou CMOS est suffisamment rapide pour faire l'acquisition d'une séquence vidéo d'une durée courte. Ces appareils disposent également d'un microphone pour capter l'environnement sonore pendant l'enregistrement de la séquence vidéo. Lors de la reproduction de la séquence vidéo, un haut-parleur disposé dans l'appareil permet de reproduire le son enregistré en même temps que les images.

Mais ces séquences vidéo sont généralement de piètre qualité, car la capacité de traitement d'image à la volée dans un appareil photographique n'autorise pas d'acquérir des séquences vidéo de haute définition. Généralement, les images d'une séquence vidéo réalisée dans un appareil photo numérique ont une définition de quelques dizaines de milliers de pixels.

Une solution consisterait à déporter sur un autre appareil le traitement pour réaliser la séquence audiovisuelle. Le transfert des données s'effectuent par un connecteur réalisant une liaison informatique avec un ordinateur ou tout autre appareil électronique tels que : télévision, imprimante, vidéo-projecteur, etc. Les données numériques correspondant aux photographies sont incorporées dans un fichier que l'on peut transférer vers un ordinateur. Une fois que les données de photo sont enregistrées dans une mémoire ou téléchargées dans un ordinateur, des logiciels permettent d'associer une ou plusieurs photographies à une séquence sonore, et ainsi créer une séquence audiovisuelle animée. Pour cela, l'utilisateur associe manuellement une photographie et une séquence son. Par exemple, l'utilisateur dicte un commentaire et l'associe ensuite à la séquence. Lorsque la photographie est visualisée, la séquence sonore est également reproduite. De cette façon, la visualisation de la photographie est agrémentée par le contenu sonore que l'utilisateur a sélectionné. Des programmes d'édition spécialisés permettent la création de tels contenus audiovisuels. Il est également connu des logiciels qui, à partir de photographies de format classique, réalisent des images panoramiques à partir d'une série de photos dont les bords sont jointifs. Ces programmes assemblent ces photos ensemble en appliquant une distorsion à chacune d'elles pour que leurs bords s'ajustent parfaitement. On obtient alors une image couvrant un angle pouvant aller jusqu'à 360°. Ces images peuvent former des panoramas horizontaux ou sphériques.

Le document WO99/59026 déposé par INFINITE PICTURE INC. décrit un procédé et un système pour fournir à un utilisateur une vue multidimensionnelle donnant une impression de mouvement dans l'espace et dans le temps.

Le document WO 98/15119 déposé par FLASHPOINT décrit un appareil photo qui télécharge des photos dans un ordinateur. L'ordinateur affiche un menu constitué de petites images destinées à être sélectionnées pour afficher les images correspondantes en grand écran. L'utilisateur associe un son à une image photo. Une séquence sonore est enregistrée pendant la durée couvrant la prise d'une pluralité de photographies. Lors de la reproduction de la séquence sonore, une table d'index permet d'afficher chaque photographie au moment de la séquence sonore au cours de laquelle elle a été prise.

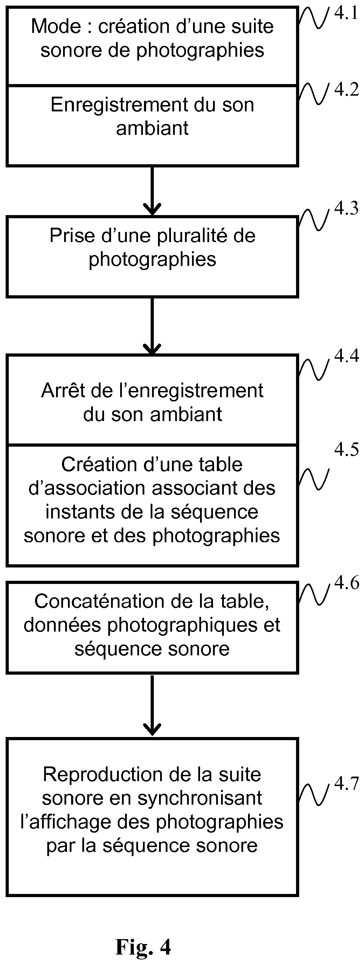

Le document WO2007/038198 déposé par KODAK décrit un appareil photo qui possède un moyen d'enregistrement de séquence sonores. L'appareil possède une mode de fonctionnement : « stitched panoramic capture mode » illustré par la figure 4 permettant d'assembler plusieurs photographies. Des séquences sonores sont prises pour chaque photographie, et lors de la reproduction. Les séquences sonores sont reproduites lorsque l'utilisateur fait glisser le segment de l'image panoramique à l'écran, ce segment contenant l'image associé à la séquence reproduite. Une variante consiste en ce que l'image assemblée est affichée complètement à l'écran et que la position d'un index sur l'image indique quel est la séquence sonore sélectionnée

La présente invention permet un autre type d'animation à partir d'une pluralité de photographie prise au cours d'une séquence sonore unique, et ceci sans intervention de l'utilisateur au moment de la reproduction.

L'invention a pour objet un procédé de reproduction d'une image panoramique sonore, comportant les étapes selon la revendication 1.

Ainsi, les photographies prises sont associées à la séquence sonore qui sert de référence temporelle lors de la reproduction. Les photographies prises sont affichées au cours de la reproduction de la séquence sonore au même moment de la dite séquence où les photos ont été prises, soit au moment de l'enregistrement de cette séquence, soit au moment d'une reproduction initiale. De cette façon, la suite sonore de photographies est reproduite avec un grand réalisme. Une image unique dite « panoramique » est créée en assemblant la pluralité de photographies pour réaliser une continuité graphique entre elles. La reproduction consiste à visualiser une partie de l'image panoramique ainsi créée, la partie de l'image panoramique correspondant à une photographie étant affichée au moment associé par la table lors de l'étape de reproduction de la séquence sonore. De cette façon, les parties communes à plusieurs photographies sont supprimées et les données visuelles occupent moins de place dans la suite sonore de photographies. Selon un autre perfectionnement, au cours de la reproduction, la partie affichée de l'image panoramique se déplace en un mouvement continu, la vitesse de déplacement de la partie qui affiche successivement chaque photographie est dépendante du temps s'écoulant entre les prises de deux photographies consécutives et de la distance séparant les deux photographies assemblées dans l'image panoramique. De cette façon, il est possible de créer une animation montrant une fenêtre visuelle se déplaçant au sein de l'image panoramique, l'affichage étant synchronisé par la séquence sonore.

Selon un autre perfectionnement, l'étape d'enregistrement commence lors de l'introduction de la première commande de prise d'une photographie, cette première photographie étant associée au début de la séquence sonore. De cette manière, une image est affichée dès le début de la reproduction de la séquence sonore. Selon un autre perfectionnement, l'étape d'enregistrement se termine à l'issue d'une durée déterminée sans prise de photographies. De cette façon, l'utilisateur n'a plus la charge d'introduire une commande pour arrêter la séquence sonore, l'appareil s'en charge automatiquement.

Selon un autre perfectionnement, l'appareil photographique enregistre préalablement une séquence sonore et la reproduit au moment des prises de photographies. La table associe chaque photographie au moment de la reproduction de la séquence sonore au cours de laquelle elle a été prise. De cette façon, il est possible d'associer un autre son que le son ambiant à une suite sonore de photographies. Selon un autre perfectionnement, l'appareil photo enregistre la séquence sonore indépendamment des prises de photographies et reproduit la séquence enregistré au moment des prises. De cette manière, il est possible d'enregistrer le son ambiant à un moment plus favorable que celui de la prise des photographies. Selon un autre perfectionnement, l'appareil affiche un symbole temporel représentant la séquence sonore en cours de reproduction, l'instant courant étant représenté par un index. De cette manière, l'utilisateur peut voir à quel moment il se situe dans la reproduction de la séquence sonore enregistrée.

L'invention a également pour objet un appareil photographique comportant un moyen d'introduction d'une commande de prise de photographies, et un moyen d'enregistrement d'une séquence sonore telle que le son ambiant ; caractérisé en ce qu'il comporte un moyen de création d'une unique image dite « panoramique sonore » en assemblant la pluralité de photographies et en associant ladite image panoramique sonore à la séquence sonore enregistrée et un moyen d'élaboration d'une table associant chaque photographie d'une pluralité de photographies au moment de la séquence sonore au cours de laquelle la photographie est prise, la table permettant d'afficher chaque photographie au moment associé par la table lors de la reproduction de la séquence sonore.

L'invention a également pour objet un appareil de reproduction comportant un moyen de visualisation d'images, un moyen de reproduction sonore et un moyen de mémorisation d'une image dite « panoramique sonore » composée d'une séquence sonore et d'une image créée en assemblant une pluralité de photographies ; caractérisé en ce que le moyen d'enregistrement contient une table associant chaque photographie de l'image panoramique sonore à un moment de la séquence sonore enregistrée au cours de laquelle cette photographie a été prise, le moyen de visualisation affichant une partie de l'image panoramique mémorisée et le moyen de reproduction sonore reproduisant la séquence sonore, de sorte que la partie de l'image panoramique sonore correspondant à une photographie est affichée au moment de la séquence sonore où cette photographie a été acquise.

D'autres caractéristiques et avantages de l'invention apparaîtront maintenant avec plus de détails dans le cadre de la description qui suit d'exemples de réalisation donnés à titre illustratif en se référant aux figures annexées qui représentent :

- les figures 1.a et 1.b représentent une vue avant et une vue arrière d'un appareil photographique pour la mise en oeuvre d'un exemple de réalisation de l'invention,
- la figure 2 illustre un chronogramme des opérations qui vont permettre à terme de réaliser une suite sonore de photographies,
- la figure 3 illustre un exemple de table de correspondance entre une photographie et le moment de sa prise au cours de la séquence sonore,
- la figure 4 montre un exemple d'organigramme des principales étapes effectuées pour la mise en oeuvre du procédé objet de l'invention,
- la figure 5 montre une apparence d'écran de l'appareil photographique selon un exemple de réalisation de l'invention,
- la figure 6 illustre la réalisation d'une image panoramique à partir d'une pluralité de photographies.

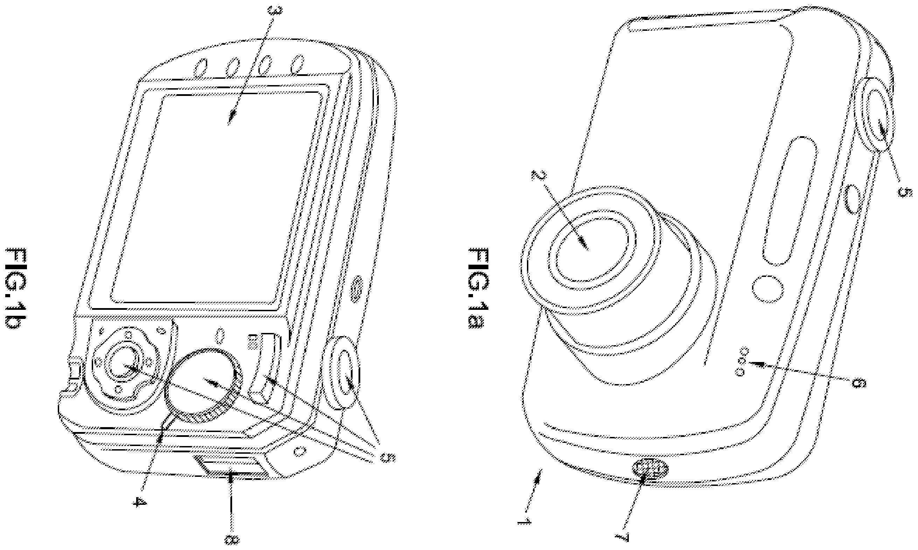

Selon un exemple préféré de réalisation, l'invention est mise en oeuvre par un appareil photo numérique, tel que le présentent les figures 1.a et 1.b. Extérieurement, l'appareil photo numérique 1 comporte un objectif 2, un écran 3 de technologie LCD ou OLED, un module mémoire éventuellement amovible 4, et des boutons 5 de réglage et de prise de vue. Les boutons permettent de placer l'appareil 1 soit en mode « prise de vues » où l'écran 3 visualise l'image détectée par les capteurs CCD, soit en mode reproduction de contenus mémorisés où les images enregistrées dans le module mémoire 4 sont affichées sur l'écran 3. Selon certains modèles, les commandes sont accessibles par des icônes affichées sur l'écran. Une icône est mise en évidence et la fonction associée est exécutée en appuyant sur la touche « OK ». L'appareil photographique 1 dispose de nombreux modes de prises de vue dont celui permettant d'enregistrer une suite sonore de photographies, appelé « Suite Sonore de Photo» ou SSP en abrégé. L'enregistrement de l'environnement sonore s'effectue à l'aide d'un microphone 6 disposé sur la face avant de l'appareil photo. Il dispose également d'un petit haut parleur 7 placé sur le coté. Lorsque l'utilisateur met son appareil en mode reproduction de contenu audiovisuel, la séquence sonore est reproduite à l'aide du haut-parleur 7.

Optionnellement, l'appareil photo comporte un connecteur 8 qui permet de transmettre des contenus visuels et sonores vers un ordinateur portable. Par exemple, la communication s'effectue par une liaison de type USB. Les photos sont enregistrées dans des fichiers qui sont transférés vers l'ordinateur. L'utilisateur peut ainsi voir ses photos sur un grand écran et écouter les contenus sonores par des hauts parleurs reliés à l'ordinateur.

Après avoir détaillé les principaux composants d'un exemple d'appareil pour la mise de l'invention, nous allons expliciter comment ceux-ci coopèrent.

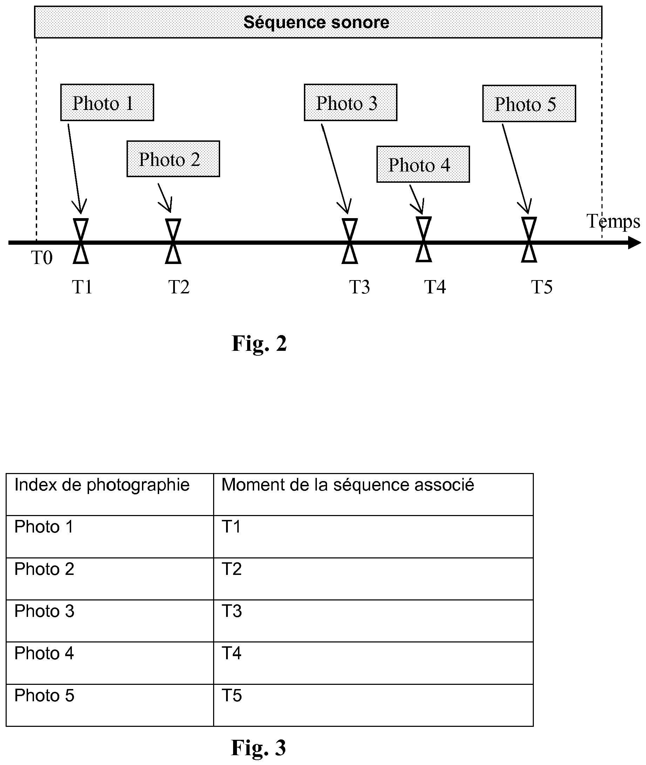

La figure 2 illustre un chronogramme des opérations permettant de réaliser une suite sonore de photographies. A l'instant T0, la séquence sonore est lancée, tous les moments suivants utilisent T0 comme point de départ. A l'instant T1, l'utilisateur prend une première photographie. Dans l'exemple illustré par la figure, l'utilisateur prend quatre autres photographies aux instants T2, T3 T4 et T5. A l'instant T6, la séquence sonore se termine.

La figure 3 illustre un exemple de table de correspondance entre des identificateurs des photographies et le moment de leurs prises. Les identificateurs « photo 1 », « photo 2 », ..., « photo 5 » sont typiquement des index pointant une certaine zone en mémoire où les données d'images sont mémorisées. Comme il a été précisé précédemment, les moments « T1 », « T2 »,..., « T5 » prennent comme référence le début de la séquence sonore.

L'organigramme de la figure 4 décrit le déroulement des principales étapes pour la mise en oeuvre du procédé selon un exemple de réalisation de l'invention. A l'étape 4.1, l'utilisateur paramètre son appareil photographique dans le mode SSP, en utilisant les touches 5 ou éventuellement un menu et une icône à sélectionner. L'appareil photographique 1 commence alors l'enregistrement d'une séquence sonore (étape 4.2). Les signaux audio captés par le microphone 6 sont numérisés et enregistrés en mémoire. Une variante consiste en ce que l'enregistrement de la séquence commence lorsque l'utilisateur prend la première photo de la suite. De cette façon, lors de la reproduction une photographie apparaît dès les premiers instants. Au cours de l'enregistrement, l'utilisateur déclenche la prise de photo en appuyant sur le bouton de prise de vues (étape 4.3). Au moment de chaque appui, l'appareil photographique 1 mémorise le moment de la prise en prenant comme référence la séquence sonore enregistrée.

A l'étape 4.4, l'appareil photographique termine l'enregistrement de la séquence sonore. La fin de l'enregistrement de la séquence sonore s'effectue par appui sur une touche spécifique, ou tout simplement en quittant le mode SSP. Selon un perfectionnement, la fin de la séquence sonore intervient à l'issue d'une durée sans prise de photographies. Cette durée est programmable à l'aide d'un menu. La durée doit être supérieure au plus grand intervalle de temps entre deux photos. Un signal sonore émis par le haut-parleur 7 avertit l'utilisateur de la fin de l'acquisition de la S.S.P. Puis, à l'étape 4.5, l'appareil photographique 1 élabore une table d'association associant chaque photographie au moment de la séquence sonore où cette photographie a été prise. Des marques temporelles (en Anglais « Time stamp ») spécifiant une photographie sont ainsi posées sur la séquence sonore. A l'étape 4.6, l'appareil photographique 1 assemble les données de la pluralité de photographies et de la séquence sonore dans la table d'association pour élaborer une suite sonore de photographies. Les données constituant la S.S.P. sont enregistrées dans un format numérique sous la forme d'un fichier facilement transférable.

Le fichier contenant une suite sonore de photographies est reproductible dans un appareil doté d'un organe d'affichage et d'au moins un haut parleur. Avantageusement, l'appareil photographique 1 dispose d'un mode de reproduction des contenus enregistrés en mémoire. Si l'utilisateur demande la reproduction d'une S.S.P., l'appareil photographique reproduit la séquence sonore sur le haut parleur 7 en visualisant sur l'écran 3 chaque photographie au moment associé par la table. Tout autre appareil tel qu'un ordinateur ou un décodeur doté d'un disque dur peut réaliser la reproduction d'une S.S.P..

Supposons que la suite sonore de photographies soit reproduite au niveau de l'appareil photographique 1, à l'étape 4.7, l'appareil photographique reproduit la séquence sonore sur le haut parleur 7 et lance une horloge. La table d'association de la suite sonore est analysée en permanence et dès que la valeur de l'horloge devient égale à celle d'un moment enregistré dans la table d'association, les données de la photographie associées sont utilisées pour l'affichage de l'image sur l'écran 3 (étape 4.7). Les photographies sont avantageusement reproduites dans l'ordre exact où elles ont été prises. Une photo reste présente à l'écran tant qu'elle n'est pas effacée par la suivante. L'utilisateur sait que la reproduction de la S.S.P. est terminée lorsque plus aucun son n'est émis par le haut-parleur 7. Selon un perfectionnement, l'utilisateur peut naviguer en avant ou en arrière dans la S.S.P. en appuyant sur les touches « → » ou « ← » et arrêter momentanément la reproduction en appuyant sur la touche « PAUSE ». Lorsque la reproduction est arrêtée, l'utilisateur peut supprimer la photo affichée en appuyant sur le bouton « EFFACE », l'effacement supprime l'association dans la table.

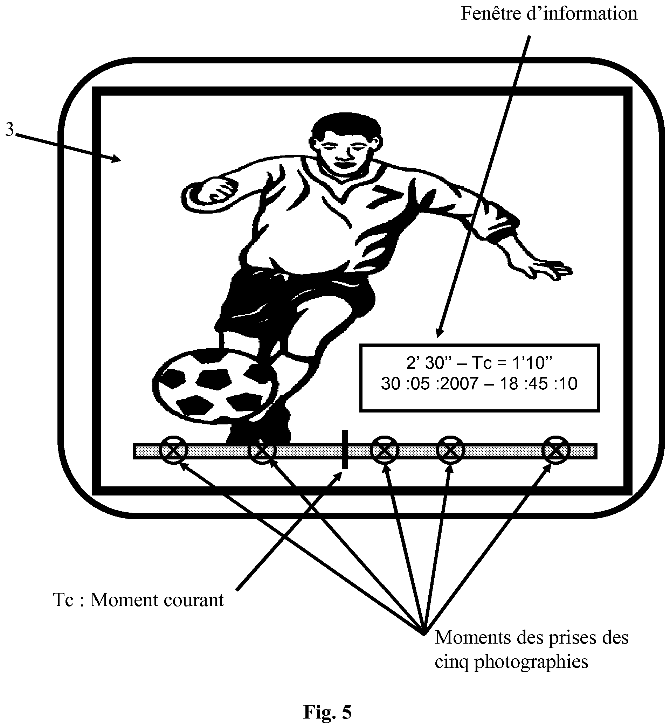

Selon un perfectionnement illustré par la figure 5, l'écran affiche un symbole temporel de la suite en plaçant les moments de prise de chaque photographie de la suite sonore. Typiquement, une ligne horizontale est tracée dont la longueur représente la durée totale de la séquence sonore. Des marques (des croix entourées d'un rond sur la figure 5) sont placées sur la ligne au moment T0, T1, .. Ti de prises des photographies. Une marque distinctive représente le moment courant, cette marque se déplace tout au long de la reproduction de la séquence sonore. De cette façon, l'utilisateur voit facilement à quel moment vont apparaître les diverses photographies de la suite. Un perfectionnement consiste à montrer dans une fenêtre de l'écran des informations générales à la S.S.P. en cours de reproduction, telles que :

- durée totale de la suite sonore, en minutes et secondes,
- valeur du moment courant, en minutes et secondes,
- nombre total de photographies contenus dans la suite
- heure et date d'acquisition de la séquence sonore, ...

Sur l'écran illustré par la figure 5, une fenêtre indique « 2' 30" - Tc = 1'10" 30 :05 :2007 - 18 :45 :10 » qui sont respectivement la durée totale de la suite sonore, le moment courant et la date et l'heure du début de l'enregistrement de la séquence sonore.

Supposons maintenant que l'utilisateur prenne soin de prendre des photographies en conservant une section commune entre une photographie et sa suivante. Pour cela, il suffit de se positionner quelque part et de prendre des photographies en tournant sur soi même d'un angle maximum permettant un recoupement entre les photographies. Une autre façon de faire est d'être dans un véhicule en mouvement sur une ligne droite. Il est alors possible de réaliser une image panoramique sonore en assemblant les photographies les unes après les autres dans l'ordre où elles ont été prises, et en associant l'image à une séquence sonore.

En prenant les deux premières photographies à assembler, il importe de déterminer si la seconde photographie se situe à gauche ou à droite de la première. Cette détermination s'effectue en analysant les cotés gauche et droit afin de déterminer un élément commun. Cette détermination permet de fixer le sens de l'assemblage : si on rajoute les photographies à gauche ou à droite de l'image panoramique. L'assemblage s'effectue de la façon suivante. La photographie 1 est prise comme image de référence. La première étape consiste à estimer la déformation à appliquer à la zone commune de la photographie 2 afin qu'elle vienne se recaler parfaitement sur la photographie 1. Pour ce faire, on peut utiliser une méthode basée sur des points d'intérêts qui consiste en une extraction de points singuliers dans la photographie 1 et dans la photographie 2, suivi d'une mise en correspondance de ces points entre les deux photographies. A partir de cet ensemble de points mis en correspondance, l'appareil réalisant l'image panoramique calcule le modèle de déformation de la zone commune. Ce modèle est alors utilisé pour recaler la photographie 2 sur la photographie 1. Ce processus est réitéré pour chaque photographie afin de l'assembler dans une image panoramique. A l'issue de ce processus, on obtient une unique image panoramique qui est l'assemblage des photographies sur l'ensemble des images.

L'image panoramique conserve dans ces données, le découpage des photographies. Ces données définissent des parties de l'image panoramique qui proviennent de chaque photographie. On peut retrouver le découpage des photographies grâce à la correspondance entre la zone de chaque photographie au sein de l'image panoramique et le moment où le son associé à cette photographie retentît au cours de la reproduction de la séquence sonore. Pour la zone commune à deux photos, on définit arbitrairement qu'une moitié de cette zone appartient à une photo et l'autre moitié à l'autre photo. Chacune de ses parties est donc associée à une référence temporelle (« Time Stamp ») qui identifie l'instant de prise de vue. Au moment de la reproduction de la suite sonore de photographies, une partie de l'image panoramique est visualisée. Cette partie affichée va se déplacer de façon continue d'un bout à l'autre de l'image panoramique. La reproduction de la séquence sonore synchronise le déplacement de la partie affichée au sein de l'image panoramique. Le déplacement de la partie affichée de l'image panorama s'effectue de telle sorte que, lorsque la séquence sonore arrive à un instant Ti, l'image affichée par l'appareil de reproduction est celle correspondant à cet instant Ti.

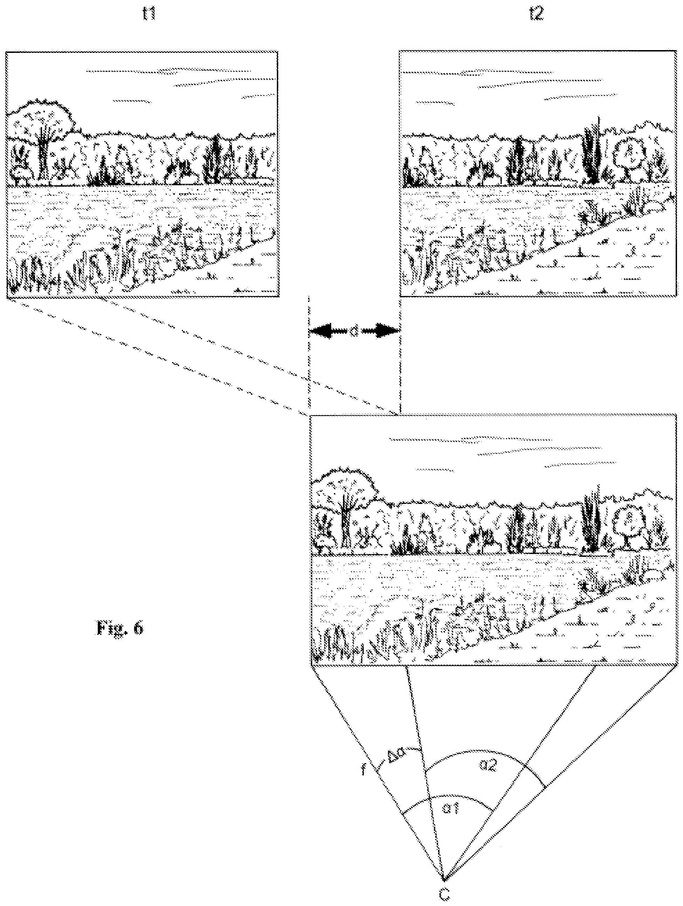

La vitesse de déplacement de la partie visualisée dépend de l'écart de temps entre deux photographies. Elle est constante entre deux photographies et varie d'une photographie à une autre. La figure 6 montre l'assemblage de deux photographies prises avec une différence d'angle $\Delta\alpha$. Les parties communes sont détectées et déterminent le sens de rotation de l'appareil photographique 1. L'image panoramique résultante est l'assemblage de la partie propre à la photographie 1, de la partie commune et de la partie propre à la photographie 2.

Connaissant la focale f, on peut calculer la valeur de l'angle associé au recouvrement entre les images 1 et 2 ainsi que le temps séparant les deux prises de vue :

$$\begin{cases} \Delta\alpha = 2 * \sin^{-1}(\dfrac{d}{2f}) \\ \Delta t = t2 - t1 \end{cases}$$

La fréquence vidéo fi en fonction du déplacement angulaire $d\alpha$ virtuel est alors donnée par l'équation :

$$fi = \frac{\frac{\Delta\alpha}{d\alpha}}{\Delta t}$$

Il existe à ce stade deux options de visualisation possibles qui peuvent être proposées à l'utilisateur :

- Echantillonnage de la mosaïque fixe (dα est constant) => fréquence vidéo fi variable
- Fréquence vidéo fixe (fi est constant) => Echantillonnage dα de la mosaïque variable

Dans le premier cas, l'utilisateur peut décider que le pas entre deux photographies successives de l'image panoramique soit par exemple très faible afin d'éviter des phénomènes d'artéfact entre photographies successives. La fréquence vidéo est alors calculée afin de satisfaire une valeur constante de dα grâce à l'équation précédente.

Dans le deuxième cas, l'utilisateur peut décider que la fréquence vidéo soit constante (par exemple à 25 images secondes). Le dα est alors calculé à l'aide de l'équation :

$$d\alpha = \frac{\Delta\alpha}{fi\Delta t}$$

Il reste alors à générer les images virtuelles à partir du dα fixé ou calculé selon le mode de réalisation retenu.

Une fois ces images générées, elles sont affichées à la fréquence vidéo fixée ou calculée et synchronisées par la séquence sonore reproduite à vitesse réelle.

De cette façon, l'écran affiche une véritable séquence animée comme si l'utilisateur avait filmé un panoramique en effectuant une rotation sur lui-même ou une translation continue. L'appareil de reproduction fait défiler des parties de l'image panoramique en asservissant le défilement par la bande son. La vitesse va donc varier d'une photographie à une autre ajoutant de la diversité et un réel attrait à la visualisation. Un appareil photographique est capable de filmer une séquence vidéo mais alors la définition est entre 10 et 100 fois inférieure. En réalisant l'assemblage de photographies de bonne définition, la séquence panoramique ainsi reproduite conserve la même définition, et donc la même qualité.

Une variante de réalisation consiste à utiliser une séquence sonore préenregistrée plutôt que le son ambiant capté par le microphone 6. Pour cela, l'appareil photographique est connecté à un appareil doté d'une mémoire contenant des séquences sonores, typiquement un lecteur MP3 ou un ordinateur. Le téléchargement de la séquence sonore s'effectue via un port USB dont le connecteur se situe sur le coté de l'appareil photographique 1. Lorsque l'utilisateur positionne son appareil photo dans le mode SSP, l'écran lui propose une suite de séquences sonores en affichant les identificateurs sur l'écran 3. L'utilisateur sélectionne la séquence dont la reproduction va servir de synchro pour la prise des photographies. En appuyant une première fois sur le bouton « prise de vue », la reproduction dite initiale de la séquence sonore sélectionnée s'effectue à l'aide du haut-parleur 7. Avantageusement, l'écran 3 affiche l'image actuelle devant le capteur CCD et en surimpression, un symbole temporel représentant la séquence sonore sélectionnée avec une marque représentant l'instant courant. De cette façon, l'utilisateur voit immédiatement combien il reste de temps avant la fin de la séquence sonore sélectionné.

L'utilisateur entend la reproduction initiale de la séquence sonore et au moment opportun, fait la prise de photographie en appuyant sur le bouton « prise de vue ». L'appareil photographique enregistre alors les données de photographie et le moment de la reproduction initiale au cours duquel la photographie a été prise. Un perfectionnement consiste en ce que l'utilisateur enregistre préalablement la séquence sonore à l'aide du microphone 6 avec le son ambiant, cette sélection sera ultérieurement reproduite permettant de prendre des photographies en les synchronisant. De cette façon, l'utilisateur peut enregistrer un fond sonore à un moment propice. Par exemple, l'utilisateur mémorise une séquence de bruit des vagues sur une plage déserte, puis l'utilisateur prend des photographies alors que la plage est pleine de monde et que le son des vagues est couvert par les paroles des personnes présentes.

Bien que la présente invention ait été décrite en référence aux modes de réalisation particuliers illustrés, celle-ci n'est nullement limitée par ces modes de réalisation, mais ne l'est que par les revendications annexées. On notera bien que tout appareil de reproduction capable de visualiser une image et reproduire un son est susceptible de s'appliquer pour la restitution d'une suite sonore de photographies.

**Revendications**

1. Procédé de reproduction d'une image panoramique sonore, comportant :

    - un enregistrement (4.2) par l'appareil photographique d'une séquence sonore et d'une pluralité de prises de photographies (4.3) et une mémorisation desdites photographies ;
    - une création (4.5) d'une unique image panoramique sonore en assemblant la pluralité de photographies et en associant ladite image panoramique sonore à la séquence sonore enregistrée ;
    - une reproduction (4.7) de l'image panoramique sonore consistant à reproduire la séquence sonore enregistrée et à visualiser une partie de l'image panoramique ainsi créée,

**caractérisé en ce que** :

- chaque photographie est associée à un moment de la séquence sonore au cours de laquelle cette photographie a été acquise,
- ladite création (4.5) de l'image panoramique sonore est mise en oeuvre à l'aide d'une table associant chaque photographie au moment de la séquence sonore au cours de laquelle cette photographie a été prise ;
- la partie de l'image panoramique sonore correspondant à une photographie est affichée au moment de la séquence sonore où cette photographie a été acquise ;
- au cours de la reproduction (4.7), la partie affichée de l'image panoramique se déplace en un mouvement continu, la vitesse de déplacement de la partie d'image affichant successivement chaque photographie dépend du temps s'écoulant entre les prises consécutives de deux photographies et de la distance séparant ces deux photographies dans l'image panoramique.

**2.** Procédé selon la revendication 1, dans lequel l'enregistrement (4.2) commence lors de l'introduction de la première commande de prise d'une photographie, cette première photographie étant associée au début de la séquence sonore.

**3.** Procédé selon la revendication 1 ou 2, dans lequel l'enregistrement (4.2) au cours de laquelle les photographies sont prises se termine à l'issue d'une durée déterminée sans prise de photographies.

**4.** Procédé selon la revendication 1 ou 2, comportant un enregistrement de la séquence sonore préalablement à la prise des photographies et une reproduction de la séquence sonore au cours de laquelle les photographies ont été prises, la table associant chaque photographie au moment de la reproduction de la séquence sonore.

**5.** Appareil de reproduction (1) comportant un moyen de visualisation d'images (3), un moyen de reproduction sonore (7), un moyen de mémorisation d'une image panoramique sonore composée d'une séquence sonore et d'une image créée en assemblant une pluralité de photographies et un moyen d'enregistrement, **caractérisé en ce que** :

- le moyen d'enregistrement contient une table associant chaque photographie de l'image panoramique sonore à un moment de la séquence sonore enregistrée au cours de laquelle cette photographie a été prise ;

- le moyen de visualisation (3) est configuré pour afficher une partie de l'image panoramique mémorisée et pour reproduire l'image panoramique sonore en déplaçant la partie affichée en un mouvement continu, la vitesse de déplacement de la partie de l'image panoramique affichant successivement chaque photographie dépend du temps s'écoulant entre les prises consécutives de deux photographies et de la distance séparant les deux photographies dans l'image panoramique ; et
- le moyen de reproduction sonore (7) est configuré pour reproduire la séquence sonore, de sorte que la partie de l'image panoramique sonore correspondant à une photographie est affichée au moment de la séquence sonore où cette photographie a été acquise.

**6.** Appareil selon la revendication 5, dans lequel le moyen d'enregistrement est configuré pour commencer l'enregistrement de la séquence sonore et des photographies associées lors de l'introduction de la première commande de prise d'une photographie, cette première photographie étant associée au début de la séquence sonore.

**7.** Appareil selon la revendication 5 ou 6, dans lequel le moyen d'enregistrement est configuré pour terminer l'enregistrement, au cours de laquelle les photographies sont prises, à l'issue d'une durée déterminée sans prise de photographies.

**Patentansprüche**

**1.** Verfahren zur Wiedergabe eines Panoramaklangbilds, wobei das Verfahren Folgendes umfasst:

- eine Aufzeichnung (4.2) einer Klangfolge durch die Kamera und mehrere Aufnahmen von Fotografien (4.3) und eine Speicherung der Fotografien;
- eine Erzeugung (4.5) eines einzigen Panoramaklangbilds durch Zusammensetzen der mehreren Fotografien und Verbinden des besagten Panoramaklangbilds mit der aufgezeichneten Klangfolge;
- eine Wiedergabe (4.7) des Panoramaklangbilds, die in dem Wiedergeben der aufgezeichneten Klangfolge und dem Darstellen eines Teils des so erzeugten Panoramabilds besteht,

**dadurch gekennzeichnet, dass**:

- jede Fotografie mit einem Moment der Klangsequenz, während der diese besagte Fotografie erlangt wurde, verbunden wird,
- die besagte Erzeugung (4.5) des Panoramaklangbilds mithilfe einer Tabelle durchgeführt wird, die jede Fotografie mit dem Moment der Klangfolge, während der diese besagte Fotografie aufgenommen wurde, verbindet;

- der Teil des Panoramaklangbilds, der einer Fotografie entspricht, zu dem Moment der Klangfolge, bei dem diese Fotografie erlangt wurde, angezeigt wird;

- während der Wiedergabe (4.7) der angezeigte Teil des Panoramabilds in einer kontinuierlichen Bewegung fortbewegt wird, wobei die Geschwindigkeit der Fortbewegung des Bildteils, der nacheinander jede Fotografie anzeigt, von der Zeit abhängt, die zwischen den aufeinanderfolgenden Aufnahmen von zwei Fotografien verstreicht, und dem Abstand, der diese zwei Fotografien in dem Panoramabild trennt, abhängt.

2. Verfahren nach Anspruch 1, wobei die Aufzeichnung (4.2) während der Einführung des ersten Befehls zur Aufnahme einer Fotografie beginnt, wobei diese erste Fotografie mit dem Anfang der Klangfolge verbunden wird.

3. Verfahren nach Anspruch 1 oder 2, wobei die Aufzeichnung (4.2), während der die Fotografien aufgenommen werden, zum Ende einer bestimmten Dauer ohne Aufnahme von Fotografien beendet wird.

4. Verfahren nach Anspruch 1 oder 2, das eine Aufzeichnung der Klangfolge vor der Aufnahme von Fotografien und eine Wiedergabe der Klangfolge, während der die Fotografien aufgenommen wurden, umfasst, wobei die Tabelle jede Fotografie mit dem Moment der Wiedergabe der Klangfolge verbindet.

5. Wiedergabegerät (1), das ein Bilddarstellungsmittel (3), ein Klangwiedergabemittel (7), ein Mittel zur Speicherung eines Panoramaklangbilds, das sich aus einer Klangfolge und einem Bild, das durch Zusammensetzen mehrerer Fotografien erzeugt wurde, zusammensetzt, und ein Aufzeichnungsmittel umfasst,

**dadurch gekennzeichnet, dass**:

- das Aufzeichnungsmittel eine Tabelle enthält, die jede Fotografie des Panoramaklangbilds mit einem Moment der aufgezeichneten Klangfolge, während der diese besagte Fotografie aufgenommen wurde, verbindet;

- das Darstellungsmittel (3) zum Anzeigen eines Teils des gespeicherten Panoramabilds und zum Wiedergeben des Panoramaklangbilds durch Fortbewegen des angezeigten Teils in einer kontinuierlichen Bewegung konfiguriert ist, wobei die Geschwindigkeit der Fortbewegung des Teils des Panoramabilds, der nacheinander jede Fotografie anzeigt, von der Zeit abhängt, die zwischen den aufeinanderfolgenden Aufnahmen von zwei Fotografien verstreicht, und dem Abstand, der diese zwei Fotografien in dem Panoramabild trennt, abhängt; und

- das Klangwiedergabebild (7) zum Wiedergeben der Klangfolge konfiguriert ist, so dass der Teil des Panoramaklangbilds, der einer Fotografie entspricht, zu dem Moment der Klangfolge, bei dem diese Fotografie erlangt wurde, angezeigt wird.

6. Vorrichtung nach Anspruch 5, wobei das Aufzeichnungsmittel zum Beginnen der Aufzeichnung der Klangfolge und von damit verbundenen Fotografien während der Einführung des ersten Befehls zur Aufnahme einer Fotografie konfiguriert ist, wobei diese erste Fotografie mit dem Anfang der Klangfolge verbunden wird.

7. Vorrichtung nach Anspruch 5 oder 6, wobei das Aufzeichnungsmittel zum Beenden der Aufzeichnung, während der die Fotografien aufgenommen werden, zum Ende einer bestimmten Dauer ohne Aufnahme von Fotografien konfiguriert ist.

**Claims**

1. Method for reproducing a panoramic sound image, comprising:

- recording (4.2) by the camera a sound sequence and a plurality of photographs taken (4.3) and storing of said photographs,

- creating (4,5) a single panoramic sound image by assembling the plurality of photographs and by associating said panoramic sound image with the recorded sound sequence,

- reproducing (4.7) the panoramic sound image consisting in reproducing the recorded sound sequence and in viewing a part of the panoramic image thus created,

**characterised in that**:

- each photograph is associated with a moment of the sound sequence during which this photograph was acquired,

- said creation (4.5) of the panoramic sound image is implemented using a table associating each photograph at the moment of the sound sequence during which this photograph was taken,

- the part of the panoramic sound image corresponding to a photograph is displayed at the moment of the sound sequence where this photograph was acquired,

- during the reproduction (4,7), the displayed part of the panoramic image displaces in a continuous movement, the speed of displacement of the image part that displays successively each photograph depends on the time passing between the consecutive takes of two photographs and the distance separating these two photographs in the panoramic image.

2. Method according to claim 1, wherein the recording (4.2) begins at the introduction of the first command to take a photograph, this first photograph being associated with the beginning of the sound sequence.

3. Method according to claim 1 or 2, wherein the recording (4.2) during which the photographs are taken ends after a determined period without taking photographs.

4. Method according to claim 1 or 2, comprising a recording of the sound sequence prior to taking photographs and a reproduction of the sound sequence during which the photographs were taken, the table associating each photograph at the moment of reproduction of the sound sequence.

5. Reproduction device (1) comprising a means for viewing images (3), a means for reproducing sound (7), a means for storing a panoramic sound image composed of a sound sequence and an image created by assembling a plurality of photographs and a recording means, **characterised in that**:

   - the recording means contains a table associating each photograph of the panoramic sound image at a moment of the sound sequence recorded during which this photograph was taken,
   - the viewing means (3) is configured to display part of the stored panoramic image and to reproduce the panoramic sound image by displacing the displayed part in a continuous movement, the displacement speed of the part of the panoramic image successively displaying each photograph depends on the time passing between the consecutive takes of two photographs and the distance separating the two photographs in the panoramic image; and
   - the sound reproduction means (7) is configured to reproduce the sound sequence, such that the part of the panoramic sound image corresponding to a photograph is displayed at the moment of the sound sequence when this photograph was acquired.

6. Device according to claim 5, wherein the recording means is configured to begin the recording of the sound sequence and photographs associated at the introduction of the first command to take a photograph, this first photograph being associated with the beginning of the sound sequence.

7. Device according to claim 5 or 6, wherein the recording means is configured to terminate the recording, during which the photographs are taken, after a determined period without taking photographs.

FIG.1a

FIG.1b

**Séquence sonore**

Photo 1

Photo 3

Photo 5

Photo 2

Photo 4

T0

T1          T2                    T3       T4          T5

Temps

**Fig. 2**

| Index de photographie | Moment de la séquence associé |
|---|---|
| Photo 1 | T1 |
| Photo 2 | T2 |
| Photo 3 | T3 |
| Photo 4 | T4 |
| Photo 5 | T5 |

**Fig. 3**

Mode : création d'une suite sonore de photographies — 4.1

Enregistrement du son ambiant — 4.2

Prise d'une pluralité de photographies — 4.3

Arrêt de l'enregistrement du son ambiant — 4.4

Création d'une table d'association associant des instants de la séquence sonore et des photographies — 4.5

Concaténation de la table, données photographiques et séquence sonore — 4.6

Reproduction de la suite sonore en synchronisant l'affichage des photographies par la séquence sonore — 4.7

**Fig. 4**

Fenêtre d'information

3

2' 30" – Tc = 1'10"
30 :05 :2007 – 18 :45 :10

Tc : Moment courant

Moments des prises des
cinq photographies

**Fig. 5**

t1

t2

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9959026 A
- WO 9815119 A

- WO 2007038198 A